# EUROPEAN PATENT APPLICATION

(11) **EP 2 214 409 A1**
(43) Date of publication of application: **04.08.2010**
(21) Application number: 08854406.9
(22) Date of filing: 30.09.2008
(51) Int. Cl.: H04N 7/01

(54) **REPRODUCTION DEVICE AND REPRODUCTION METHOD**

(30) Priority: 29.11.2007 JP 2007308530
(71) Applicant: Panasonic Corporation, Kadoma-shi Osaka 571-8501 (JP)
(72) Inventor: IMURA, Koji, Chuo-ku Osaka-shi Osaka 540-6207 (JP)
(74) Representative: Grünecker, Kinkeldey, Stockmair & Schwanhäusser Anwaltssozietät
(86) International application number: PCT/JP2008/002743
(87) International publication number: WO 2009/069247

(57) **Abstract**

The present invention provides a reproduction apparatus that is capable of suppressing a flicker or a picture distortion caused when an interpolation frame in which a false interpolation occurred is reproduced and output, by specifying effectively the interpolation frame in which the false interpolation might occur. A reproduction apparatus of the present invention includes a moving vector calculating section 103 for calculating a moving vector based on pixels configuring a first frame and a second frame, an interpolation frame generating section 104 for generating an interpolation frame to interpolate the first frame and the second frame based on the moving vector, and an interpolation frame output deciding section 106 for deciding whether the interpolation frame should be output or not, based on a change between the first frame and the second frame.

## Description

### Technical Field

The present invention relates to a reproduction apparatus and a reproduction method, which are capable of improving a temporal resolution by generating a virtual frame (interpolation frame) from two sheets of successive frames, and then reproducing the frames including the interpolation frame.

### Background Art

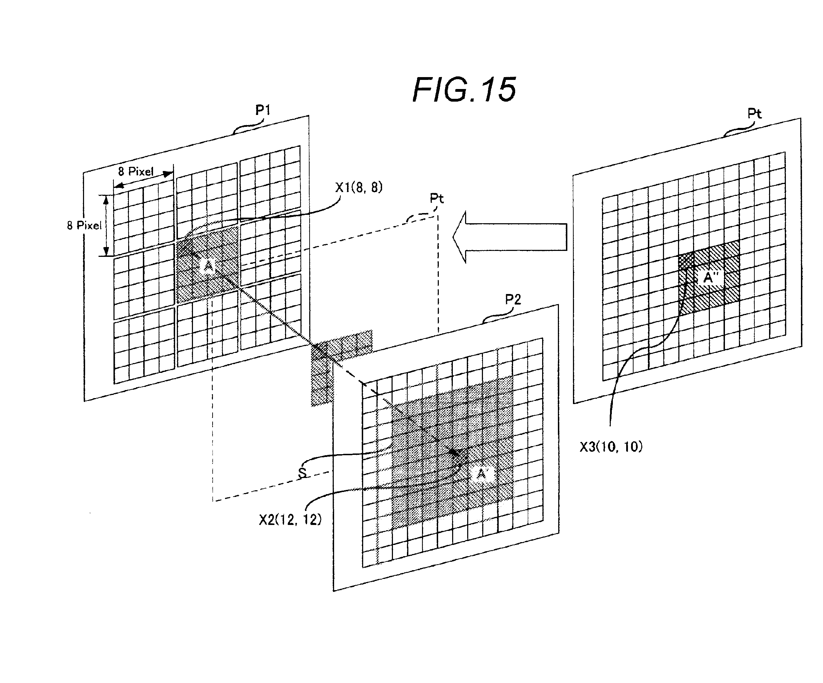

As the common approach of generating the interpolation frame, there is an approach described hereunder. FIG. 15 shows a diagram for explaining an approach of generating the interpolation frame. In order to generate the interpolation frame, first two sheets of successive frames P1, P2 (in the present specification, it is supposed that the term "frame" means the frame that has already undergone the coding and is used to generate the "interpolation frame") are split into areas of certain size (theses areas will be referred to as "blocks" hereinafter). In FIG. 15, the frame is split into plural areas each of which is formed from an 8x8 matrix of pixels, for example. Then, the presumption is made by the block matching method to decide to which area of the frame P2 whose output timing is late each block of the frame P1 whose output timing is early would be shifted. FIG. 15 shows the case where a block A out of the blocks configuring the frame P1 is shifted to an area A' in the frame P2.

Here, an index indicating in which direction and to what extent in distance a certain block configuring the frame P1 have been shifted in the frame P2 is a moving vector MV (Moving Vector). The moving vector MV is calculated from the representative coordinates X1 (x1, y1) of the block configuring the frame P1, and the representative coordinates X2 (x2, y2) of the presumed area, to which the block configuring the frame P1 have been shifted, in the frame P2. FIG. 15 shows the case where the representative coordinates X1 of the block A is (x1, y1) = (8, 8) and the representative coordinates X2 of the presumed area A' to which the block the frame P1 have been shifted is (x2, y2) = (12, 12). In this case, the moving vector MV is calculated as (x2, y2) - (x1, y1) = (4, 4).

An interpolation frame Pt is generated based on the moving vectors that are calculated with respect to the blocks configuring the frame P1, as described above. That is, it is assumed that the blocks configuring the frame P1 are moved by a uniform linear motion and also it is assumed that the interpolation frame is positioned in the middle between the frame P1 and the frame P2 on a time basis, the blocks configuring the frame P1 are positioned in the (MV/2)-shifted areas in the interpolation frame Pt respectively. In FIG. 15, the case where the block A out of the blocks configuring the frame P1 is shifted to an area A" in the interpolation frame Pt is shown, and the area A" in the interpolation frame is positioned in the area that is shifted by MV/2 = (2, 2) (the representative coordinates X3 of the presumed area A" to which the block A is shifted are (x3, y3) = (10, 10)). In this manner, the area A" is derived as a part of the interpolation frame Pt.

The interpolation frame Pt is generated by applying a series of processes, i.e., (1) specification of the moving destination of the block by the block matching method, (2) calculation of the moving vector MV, and (3) definition of a part of the interpolation frame Pt, as described above, to respective blocks configuring the frame P1. Such approach of generating the interpolation frame is employed in the video signal reproduction apparatus disclosed in Patent Literature 1, for example.
Patent Literature 1: JP-A-10-233996

### Disclosure of the Invention

### Problems that the Invention is to Solve

However, due to the reasons described hereunder, a false interpolation occurs in the interpolation frame generated by the above approach. Therefore, a matching between the interpolation frame and the preceding and succeeding frames cannot be kept, and a flicker or a picture distortion can be caused when the video is reproduced and output. The reasons why the false interpolation occurs are that, when the moving destination of the block is specified by the block matching method in the above process (1), there is a limit to a search range in which it can be searched whether or not the block belonging to the frame P1 is present (an area S shown in FIG. 15 corresponds to the search range. In FIG. 15, the case where the search range S in the frame 2 corresponds to the area that is extended around the block A serving as the searched object by up to four pixels is shown as an example) and that, when a magnitude of the moving vector is enlarged rather than the search range, the concerned block is regarded such that this block is not shifted or the concerned block is regarded such that this block is shifted to the wrong area. The reason why there is a limit to the search range is that, because the search range and an amount of processing required for the search are in the tradeoff relation, an amount of processing required to generate the interpolation frame is increased much more as the search range is increased wider.

Out of the mobile terminal equipments typified by the cellular phone, nowadays there is the equipment that can receive the digital television broadcast. In the mobile terminal equipment whose radio wave receiving state of the television broadcast is varied moment by moment, such a situation may be considered that a loss of frame occurs. In such case, when the interpolation frame is generated from two frames that are located precedingly and succeedingly to sandwich the lost frame in so as to interpolate the lost frame, the moving vector is prone to expand. As a result, the false interpolation easily occurs in the generated interpolation frame. Some sort of countermeasures must be taken against the interpolation frame in which the false interpolation might occur.

The present invention has been made in view of the above circumstances, and it is an object of the present invention to provide a reproduction apparatus and a reproduction method, capable of suppressing a flicker or a picture distortion caused when an interpolation frame in which a false interpolation occurred is reproduced and output, by specifying effectively the interpolation frame in which the false interpolation might occur.

### Means for Solving the Problems

A reproduction apparatus according to the present invention includes: a storing section for storing frames; a moving vector calculating section which is adapted to calculate a moving vector based on pixels configuring a first frame stored in the storing section at a first point of time and a second frame stored in the storing section at a second point of time; an interpolation frame generating section which is adapted to generate an interpolation frame to interpolate the first frame and the second frame, based on the moving vector calculated by the moving vector calculating section; and an interpolation frame output deciding section which is adapted to decide whether the interpolation frame should be output or not, based on a change between the first frame and the second frame.

A reproduction method according to the present invention includes: a step of storing a first frame at a first point of time; a step of storing a second frame at a second point of time; a step of calculating a moving vector based on pixels configuring the first frame and the second frame; a step of generating an interpolation frame to interpolate the first frame and the second frame, based on the moving vector; and a step of deciding whether the interpolation frame should be output or not, based on a change between the first frame and the second frame.

According to these configurations, the flicker or the picture distortion caused when the interpolation frame in which the false interpolation occurred is reproduced and output can be suppressed by specifying effectively the interpolation frame, in which the false interpolation might occur, not to output the concerned interpolation frame at a time of reproducing the video.

The reproduction apparatus according to the present invention includes the configuration which further includes a frame interval measuring section which is adapted to measure a time interval between the first point of time and the second point of time, wherein, when the time interval measured by the frame interval measuring section is not less than a first threshold, the interpolation frame output deciding section decides that the interpolation frame should not be output.

According to the configuration, it is decided whether or not the false interpolation occurred in the interpolation frame, in response to a time interval during which two sheets of successive frames are input, so that the interpolation frame in which the false interpolation might occur can be specified effectively. As a result, such a situation can be suppressed that the concerned interpolation frame is output at a time of reproducing the video.

The reproduction apparatus according to the present invention includes the configuration wherein, when a magnitude of the moving vector calculated by the moving vector calculating section is not less than a second threshold, the interpolation frame output deciding section decides that the interpolation frame should not be output.

According to the configuration, it is decided whether or not the false interpolation occurred in the interpolation frame, in response to a magnitude of the moving vector that is calculated by two sheets of successive frames, so that the interpolation frame in which the false interpolation might occur can be specified effectively. As a result, such a situation can be suppressed that the concerned interpolation frame is output at a time of reproducing the video.

The reproduction apparatus according to the present invention includes the configuration which further includes a slit area specifying section which is adapted to specify a slit area contained in the first frame or the second frame, wherein, when the magnitude of the moving vector calculated by the moving vector calculating section is not less than a third threshold whose value is smaller than the second threshold and a size of the slit area specified by the slit area specifying section is not less than a fourth threshold, the interpolation frame output deciding section decides that the interpolation frame should not be output.

According to the configuration, it is decided whether the interpolation frame should be output or not, in response to a size of the slit area that lies in the frame. Therefore, this configuration makes it possible to suppress the slit noise or makes it difficult for the viewer to notice the slit noise even when the slit noise is generated.

The reproduction apparatus according to the present invention includes the configuration wherein, when a difference between pixel values on at least one coordinates configuring the first frame and the second frame respectively is not less than a fifth threshold, the interpolation frame output deciding section decides that the interpolation frame should not be output.

According to the configuration, the interpolation frame in which the false interpolation might occur can be specified by the simple process.

### Advantages of the Invention

According to the reproduction apparatus and the reproduction method of the present invention, an output of the interpolation frame, in which the false interpolation might occur, can be prevented at a time of video reproduction by specifying effectively such interpolation frame. Therefore, a flicker or a picture distortion caused when the interpolation frame in which the false interpolation occurred is reproduced and output can be suppressed.

### Brief Description of the Drawings

FIG. 1 is a functional block diagram of a reproduction apparatus according to a first embodiment of the present invention.
FIG. 2 is a time chart explaining a buffering process of an output image in the reproduction apparatus of the first embodiment of the present invention.
FIG. 3 is a flowchart explaining a writing process into an output image buffer in the reproduction apparatus of the first embodiment of the present invention.
FIG. 4 is a functional block diagram of a reproduction apparatus according to a second embodiment of the present invention.
FIG. 5 is a time chart explaining a buffering process of an output image in the reproduction apparatus of the second embodiment of the present invention.
FIG. 6 is a flowchart explaining a writing process into an output image buffer in the reproduction apparatus of the first embodiment of the present invention.
FIG. 7 is a functional block diagram of a reproduction apparatus according to a third embodiment of the present invention.
FIG. 8 is a functional block diagram of a reproduction apparatus according to a fourth embodiment of the present invention.
FIG. 9 is a time chart explaining a buffering process of an output image in the reproduction apparatus of the fourth embodiment of the present invention.
FIG. 10 is a flowchart explaining a writing process into an output image buffer in the reproduction apparatus of the fourth embodiment of the present invention.
FIG. 11 explains a slit noise.
FIG. 12 is a functional block diagram of a reproduction apparatus according to a fifth embodiment of the present invention.
FIG. 13 explains a process of detecting a slit area.
FIG. 14 is a flowchart explaining a writing process into an output image buffer in the reproduction apparatus of the fifth embodiment of the present invention.
FIG. 15 explains an approach of generating an interpolation frame.

### Description of Reference Numerals

- 100: change switch
- 101, 102: frame buffer
- 103: moving vector calculating section
- 104: interpolation frame generating section
- 105: frame interval measuring section
- 106, 202, 302, 401, 503: interpolation frame output deciding section
- 107, 203, 303, 402, 504: output controlling section
- 108: output image buffer
- 201: moving vector deciding section
- 301: pixel value deciding section
- 501: slit area detecting section
- 502: size-of-the-slit-area counting section

### Best Mode for Carrying Out the Invention

Reproduction apparatuses according to respective embodiments of the present invention will be explained in detail hereinafter. First, an outline of processes handled by the reproduction apparatuses of the embodiments of the present invention will be explained hereunder.

The reasons why the false interpolation occurs in the interpolation frame are that, when the moving destination of the block is specified by the block matching method, there is a limit to a search range of the frame 2 in which it can be searched whether or not a certain block belonging to the frame P1 is present and that, when a magnitude of the moving vector is enlarged rather than the search range, the concerned block is regarded such that this block is not shifted or the concerned block is regarded such that this block is shifted to the wrong area. The principal processes executed by the reproduction apparatus of the present invention are to decide whether or not the interpolation frame has a high possibility that the false interpolation might occur, and to delete the interpolation frame that is decided to have a high possibility that the false interpolation might occur from the frames that will be reproduced and output.

In the reproduction apparatuses of the embodiments of the present invention, as the criterion applied to decide whether or not the interpolation frame has a high possibility that the false interpolation might occur, following criteria of judgment are set up. That is, [1] a time interval between two sheets of successive frames, [2] a magnitude of the moving vector that is calculated from two sheets of successive frames, and [3] an amount of change in values of pixels configuring two sheets of successive frames respectively, are set up as the above criteria.

### (First Embodiment)

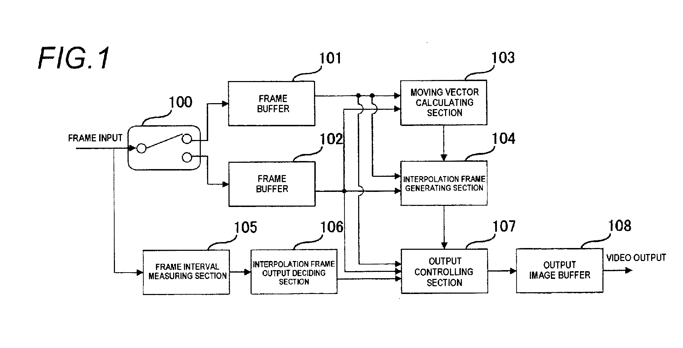

First, a reproduction apparatus according to a first embodiment of the present invention, which decides whether or not the interpolation frame has a high possibility that the false interpolation might occur, based on [1] a time interval between two sheets of successive frames, will be explained hereunder. In FIG. 1, a functional block diagram of the reproduction apparatus of the first embodiment of the present invention is illustrated.

The reproduction apparatus of the first embodiment of the present invention includes a changing switch 100, a frame buffer 101, a frame buffer 102, a moving vector calculating section 103, an interpolation frame generating section 104, a frame interval measuring section 105, an interpolation frame output deciding section 106, an output controlling section 107, and an output image buffer 108. Out of these elements, the frame buffer 101, the frame buffer 102, and the output image buffer 108 are implemented in RAM, and the moving vector calculating section 103, the interpolation frame generating section 104, the frame interval measuring section 105, the interpolation frame output deciding section 106, and the output controlling section 107 are implemented in CPU.

The changing switch 100 switches the frame buffer every time the frame is input, and outputs the input frame to any one of the frame buffer 101 and the frame buffer 102.

The frame buffers 101, 102 are implemented in the RAM, and store the input frame therein respectively. When the frame buffers 101, 102 have already stored the frame, they overwrite the input frame respectively.

The moving vector calculating section 103 calculates the moving vectors with respect to respective blocks that configure the frames stored in the frame buffer 101 and the frame buffer 102. In this case, a sequence of frames stored in the frame buffers 101, 102 is changed every time when the new frame is stored in the frame buffers 101, 102. For example, the frame that is input late in order is stored in the frame buffer 102 when the frame 1 is stored in the frame buffer 101 and then the frame 2 is stored in the frame buffer 102, but subsequently the frame that is input late in order is stored in the frame buffer 101 when the frame 3 is stored in the frame buffer 101. The moving vector calculating section 103 detects the sequence of the frames stored in the frame buffers 101, 102 in cooperation with the switching operation of the changing switch 100, and calculates the moving vector.

The interpolation frame generating section 104 generates the interpolation frame on a basis of the frames stored in the frame buffer 101 and the frame buffer 102 and the moving vector being calculated by the moving vector calculating section 103. Also, the interpolation frame generating section 104 detects the sequence of the frames stored in the frame buffers 101, 102 in cooperation with the switching operation of the changing switch 100, and generates the interpolation frame based on the moving vector.

The frame interval measuring section 105 measures a time interval from a point of time when the preceding frame is input into the changing switch 100 to a point of time when the current frame is input into the changing switch 100, by referring to the numerical value that is counted by a timer (not shown in FIG. 1).

The interpolation frame output deciding section 106 compares the time interval that the frame interval measuring section 105 measured with a predetermined threshold. Then, when the measured time interval is larger than the predetermined threshold, the interpolation frame output deciding section 106 notifies the output controlling section 107 of this effect.

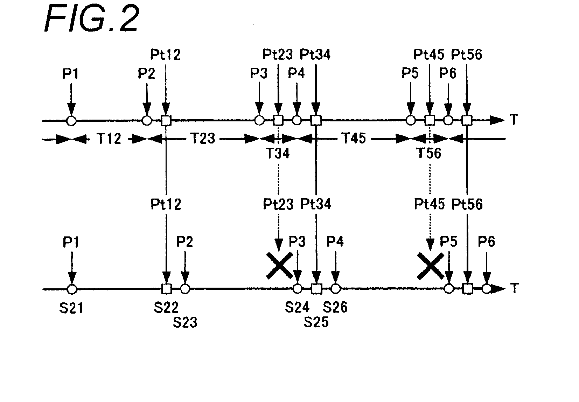

The output controlling section 107 records the frame being read from the frame buffer 101, the frame from the frame buffer 102, and the frame being generated by the interpolation frame generating section 104 in the output image buffer 108, in compliance with the rule explained hereunder. In FIG. 2, a time chart explaining a buffering process of an output image in the reproduction apparatus of the first embodiment of the present invention is shown. FIG. 2 shows time charts explaining an output image buffering process executed by the reproduction apparatus of the first embodiment of the present invention. In FIG. 2, a time chart in the upper stage shows timings at which the frame is written into the frame buffers 101, 102 respectively and a timing at which the interpolation frame is generated, and also a time chart in the lower stage shows timings at which the frame and the interpolation frame are written into the output image buffer 108.

In the time chart in the upper stage in FIG. 2, a mark "O" denotes a timing at which frames P1, P2, P3, P4, P5 are written into the frame buffers 101, 102 respectively, and a mark "□" denotes a timing at which interpolation frames Pt12, Pt23, Pt34, Pt45, Pt56 are generated respectively. In this case, an indication "PtMN (M, N are an integer respectively)" denotes that PtMN corresponds to the interpolation frame that interpolates a frame PM and a frame PN. The interpolation frame generating section 104 generates the interpolation frame PtMN (M=N-1) every time when the new frame PN (N=2, 3, 4, 5, 6) is recorded into the frame buffers 101, 102. For example, the interpolation frame generating section 104 generates the interpolation frame Pt12 when the new frame P2 is recorded.

Also, in the time chart in the upper stage in FIG. 2, time intervals measured by the frame interval measuring section 105 are denoted as T12, T23, T34, T45, T56. An indication "TMN (M, N are an integer respectively)" denotes that TMN corresponds to the time interval from a point of time when the frame PM is input to a point of time when the frame PN is input. In this case, it is assumed that the interpolation frame output deciding section 106 decides such that the time intervals T12, T34, T56 out of the time intervals T12, T23, T34, T45, T56 are smaller than a predetermined threshold and the remaining time intervals T23, T45 are larger than the predetermined threshold

Then, the time chart in the lower stage in FIG. 2 will be explained hereunder. When the inputting of the frames configuring certain moving picture contents is started, the output controlling section 107 reads the head frame P1 from one buffer of the frame buffers 101, 102, and then records this frame in the output image buffer 108 (S21). Then, when the interpolation frame output deciding section 106 notifies the output controlling section 107 that the time interval T12 is smaller than the predetermined threshold, the output controlling section 107 records the interpolation frame Pt12 being generated by the interpolation frame generating section 104 in the output image buffer 108 (S22). Then, the output controlling section 107 reads the frame P2 from the other buffer, in which the frame P1 is not recorded, out of the frame buffers 101, 102, and then records this frame in the output image buffer 108 (S23).

Then, when the interpolation frame output deciding section 106 notifies the output controlling section 107 that the time interval T23 is smaller than the predetermined threshold, the output controlling section 107 does not record the interpolation frame Pt23 being generated by the interpolation frame generating section 104 in the output image buffer 108, but reads the frame P3 from the other buffer, in which the frame P2 is not recorded, out of the frame buffers 101, 102 and then records this frame in the output image buffer 108 (S24).

Then, when the interpolation frame output deciding section 106 notifies the output controlling section 107 that the time interval T34 is smaller than the predetermined threshold, the output controlling section 107 records the interpolation frame Pt34 being generated by the interpolation frame generating section 104 in the output image buffer 108 (S25). Then, the output controlling section 107 reads the frame P4 from the other buffer, in which the frame P3 is not recorded, out of the frame buffers 101, 102, and then records this frame in the output image buffer 108 (S26). Subsequently, the output controlling section 107 similarly records the frame being read from the frame buffer 101, the frame being read from the frame buffer 102, and the interpolation frame being generated by the interpolation frame generating section 104 in the output image buffer 108.

The frames and the interpolation frame, which are recorded in the output image buffer 108 in sequence on the time chart shown in the lower stage in FIG. 2, are video-output in accordance with that sequence.

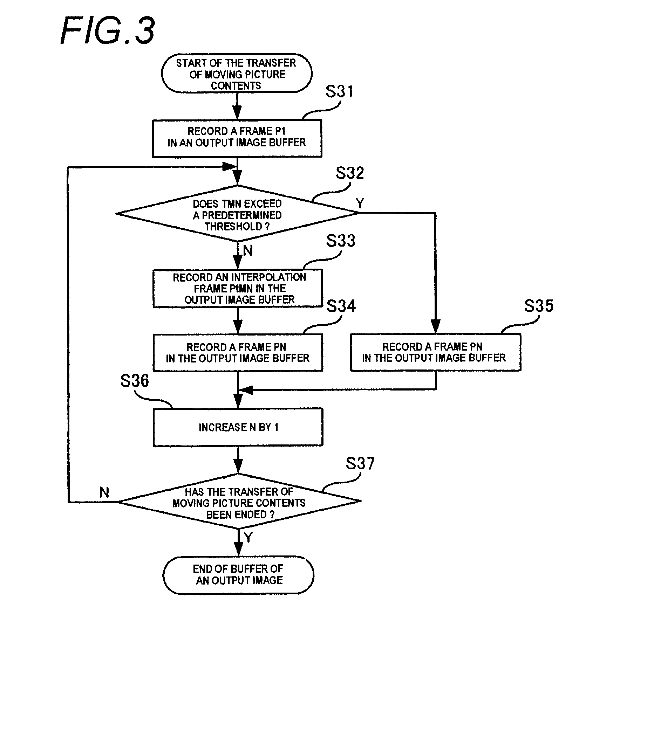

The writing process into the output image buffer in the reproduction apparatus of the first embodiment of the present invention is given in the generalized form as follows. In FIG. 3, a flowchart explaining the writing process into the output image buffer in the reproduction apparatus of the first embodiment of the present invention is shown.

When the inputting of the frames configuring some moving picture contents is started, first the reproduction apparatus reads the head frame P1 from one buffer of the frame buffers 101, 102, and then records this frame in the output image buffer 108 (step S31).

Then, the reproduction apparatus decides whether or not the time interval TMN (M=N-1, N=2, 3,...) exceeds a predetermined threshold (step S32). If the time interval TMN does not exceed the predetermined threshold (step S32, N), the reproduction apparatus records the interpolation frame PtMN in the output image buffer 108 (step S33). Then, the reproduction apparatus reads the frame PN from the other buffer, in which the frame PM is not recorded, out of the frame buffers 101, 102, and then records this frame in the output image buffer 108 (step S34).

In contrast, if the time interval TMN exceeds the predetermined threshold (step S32, Y), the reproduction apparatus reads the frame PN from the other buffer, in which the frame PM is not recorded, out of the frame buffers 101, 102, and then records this frame in the output image buffer 108 (step S35).

Then, while the inputting of the moving picture contents is being continued (step S37, N), the reproduction apparatus continues the processes in step S32 to step S35 while increasing N by 1 (step S36).

In case two sheets of successive frames are input at the time interval in excess of a predetermined time, there is a possibility that the pixel values configuring these frames are largely varied. Even when the interpolation frame is generated based on these frames under such condition, the interpolation frame has a high possibility that the false interpolation might occur. Therefore, according to the reproduction apparatus and the reproduction method of the first embodiment of the present invention, the interpolation frame in which the false interpolation might occur is specified effectively such that the concerned interpolation frame should not be recorded in the output image buffer, and thus the concerned interpolation frame is never output at a time of reproducing the video. As a result, the picture distortion caused by reproducing and outputting the interpolation frame in which the false interpolation occurred can be suppressed.

### (Second Embodiment)

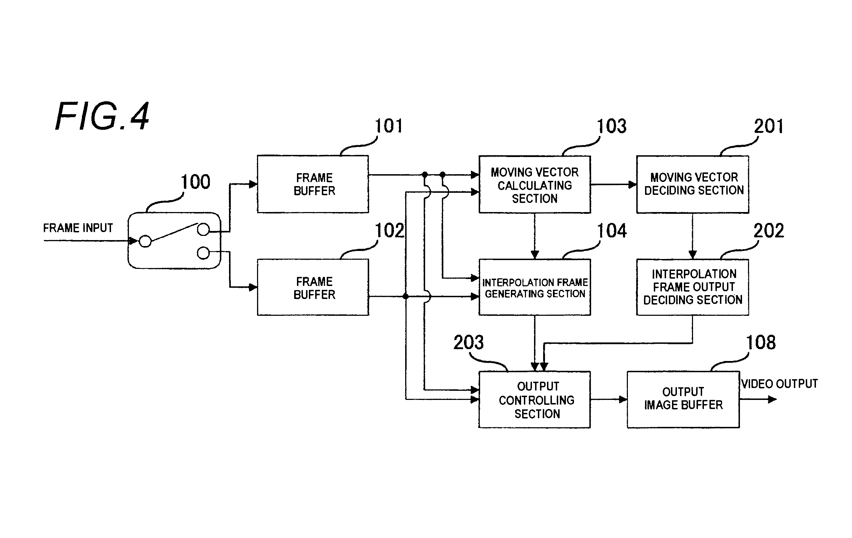

Next, a reproduction apparatus according to a second embodiment of the present invention, which decides whether or not the interpolation frame has a high possibility that the false interpolation might occur, based on [2] a magnitude of the moving vector that is calculated from two sheets of successive frames, will be explained hereunder. In FIG. 4, a functional block diagram of the reproduction apparatus of the second embodiment of the present invention is illustrated. In this event, in FIG. 4, respective sections to which the similar reference numerals to those in the functional block diagram shown in FIG. 1 are assigned respectively are similar to those explained in the first embodiment, and therefore their explanation will be omitted herein.

A moving vector deciding section 201 expresses numerically an amount of change between two sheets of successive frames from magnitudes of the moving vectors of respective blocks, which are calculated by the moving vector calculating section 103. Concretely, the moving vector deciding section 201 may adopt the largest value of the magnitudes of the moving vectors of respective blocks as an amount of change, adopt an average value of the magnitudes of the moving vectors of respective blocks as an amount of change, adopt the number of blocks that have the moving vectors whose magnitude is in excess of a certain threshold as an amount of change, and the like. In the second embodiment, the case where the moving vector deciding section 201 expresses numerically the number of blocks, which have the moving vectors a magnitude of which is in excess of a certain threshold, as an amount of change between two sheets of successive frames will be explained hereunder.

An interpolation frame output deciding section 202 compares the number of blocks that the moving vector deciding section 201 decided with a predetermined threshold. Then, if the number of decided blocks is larger than the predetermined threshold, the interpolation frame output deciding section 202 notifies an output controlling section 203 of this effect. The "predetermined threshold" is set as a value that is defined by a ratio of the number of blocks, which have the moving vectors whose magnitude is in excess of a certain threshold, to the total number of blocks, for example.

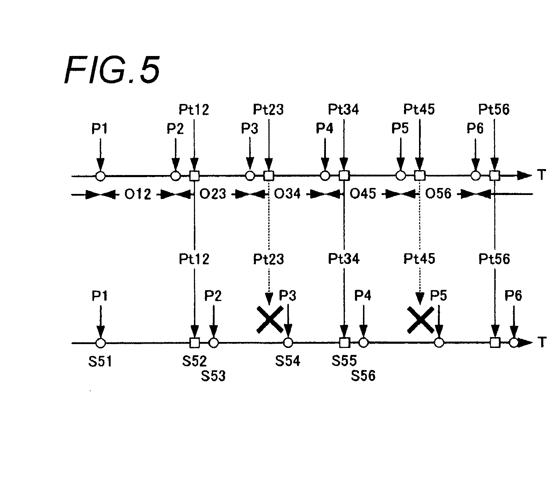

The output controlling section 203 records the frame being read from the frame buffer 101, the frame being read from the frame buffer 102, and the frame being generated by the interpolation frame generating section 104 in the output image buffer 108, in compliance with the rule explained hereunder. In FIG. 5, a time chart explaining a buffering process of an output image in the reproduction apparatus of the second embodiment of the present invention is shown. In FIG. 5, a time chart in the upper stage shows timings at which the frame is written into the frame buffers 101, 102 respectively and a timing at which the interpolation frame is generated, and a time chart in the lower stage shows timings at which the frame and the interpolation frame are written into the output image buffer 108.

In the time chart in the upper stage in FIG. 5, a mark "O" denotes a timing at which the frames P1, P2, P3, P4, P5, P6 are written into the frame buffers 101, 102 respectively, and a mark "□" denotes a timing at which the interpolation frames Pt12, Pt23, Pt34, Pt45, Pt56 are generated respectively. The interpolation frame generating section 104 generates the interpolation frame PtMN (M=N-1) every time when the new frame PN (N=2, 3, 4, 5, 6) is recorded into the frame buffers 101, 102. For example, the interpolation frame generating section 104 generates the interpolation frame Pt12 when the new frame P2 is recorded.

Also, in the time chart in the upper stage in FIG. 5, the numbers of blocks, which are decided by the moving vector deciding section 201 and which have the moving vectors whose magnitude is in excess of a certain threshold, are denoted as O12, 023, 034, 045, 056. An indication "OMN (M, N are an integer respectively)" denotes the number of blocks, which have the moving vectors whose magnitude is in excess of a certain threshold, out of respective blocks whose moving vector is calculated based on the frame PM and the frame PN. In this case, it is assumed that the interpolation frame output deciding section 202 decides such that the numbers of blocks O12, O34, O56 out of the numbers of blocks O12, 023, 034, 045, 056 are smaller than a predetermined threshold and the numbers of blocks T23, T45 are larger than the predetermined threshold.

Then, the time chart in the lower stage in FIG. 5 will be explained hereunder. When the inputting of the frames configuring certain moving picture contents is started, first the output controlling section 203 reads the head frame P1 from one buffer of the frame buffers 101, 102, and then records this frame in the output image buffer 108 (S51). Then, when the interpolation frame output deciding section 202 notifies the output controlling section 203 that the number of block O12 is smaller than a predetermined threshold, the output controlling section 203 records the interpolation frame Pt12 being generated by the interpolation frame generating section 104 in the output image buffer 108 (S52). Then, the output controlling section 203 reads the frame P2 from the other buffer, in which the frame P1 is not recorded, out of the frame buffers 101, 102, and then records this frame in the output image buffer 108 (S53).

Then, when the interpolation frame output deciding section 202 notifies the output controlling section 203 that the number of block 023 is larger than the predetermined threshold, the output controlling section 203 does not record the interpolation frame Pt23 being generated by the interpolation frame generating section 104 in the output image buffer 108, but reads the frame P3 from the other buffer, in which the frame P2 is not recorded, out of the frame buffers 101, 102 and then records this frame in the output image buffer 108 (S54).

Then, when the interpolation frame output deciding section 202 notifies the output controlling section 203 that the number of block 034 is smaller than a predetermined threshold, the output controlling section 203 records the interpolation frame Pt34 being generated by the interpolation frame generating section 104 in the output image buffer 108 (S55). Then, the output controlling section 203 reads the frame P4 from the other buffer, in which the frame P3 is not recorded, out of the frame buffers 101, 102, and then records this frame in the output image buffer 108 (S56). Subsequently, the output controlling section 203 similarly records the frame being read from the frame buffer 101, the frame being read from the frame buffer 102, and the interpolation frame being generated by the interpolation frame generating section 104 in the output image buffer 108.

The frames and the interpolation frame, which are recorded in the output image buffer 108 in sequence on the time chart shown in the lower stage in FIG. 5, are video-output in accordance with that sequence.

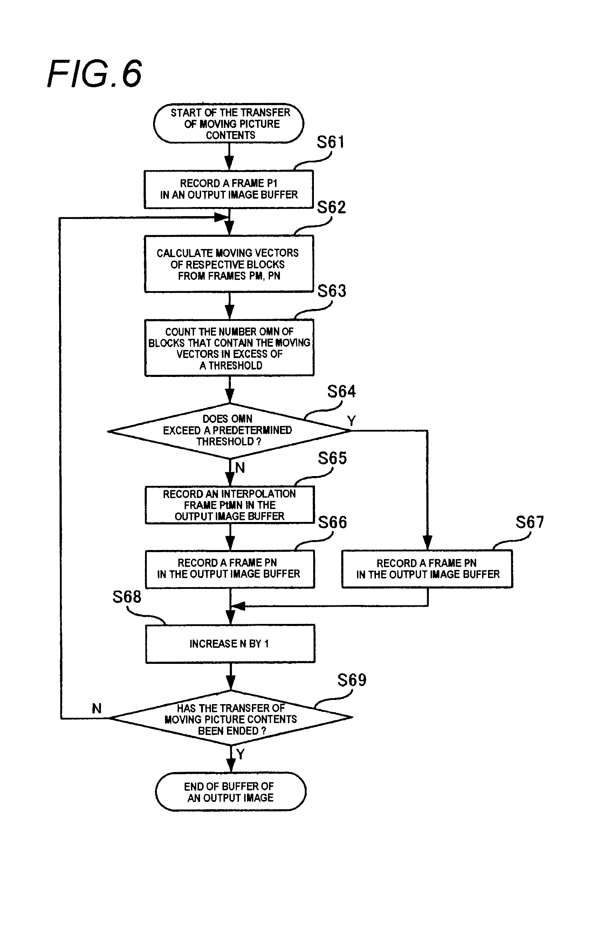

The writing process into the output image buffer in the reproduction apparatus of the second embodiment of the present invention is given in the generalized form as follows. In FIG. 6, a flowchart explaining the writing process into the output image buffer in the reproduction apparatus of the second embodiment of the present invention is shown.

When the inputting of the frames configuring some moving picture contents is started, first the reproduction apparatus reads the head frame P1 from one buffer of the frame buffers 101, 102, and then records this frame in the output image buffer 108 (step S61).

Then, the reproduction apparatus calculates the moving vectors of respective blocks from two sheets of successive frames PM, PN (step S62). Then, the reproduction apparatus counts the number OMN of blocks that have the moving vectors whose magnitude is in excess of a certain threshold (step S63).

Then, the reproduction apparatus decides whether or not the number OMN (M=N-1, N=2, 3,...) of blocks exceeds a predetermined threshold (step S64). If the number OMN of blocks does not exceed the predetermined threshold (step S64, N), the reproduction apparatus records the interpolation frame PtMN in the output image buffer 108 (step S65). Then, the reproduction apparatus reads the frame PN from the other buffer, in which the frame PM is not recorded, out of the frame buffers 101, 102, and then records this frame in the output image buffer 108 (step S66).

In contrast, if the number OMN of blocks exceeds the predetermined threshold (step S64, Y), the reproduction apparatus reads the frame PN from the other buffer, in which the frame PN is not recorded, out of the frame buffers 101, 102, and then records this frame in the output image buffer 108 (step S67).

While the inputting of the moving picture contents is being continued (step S69, N), the reproduction apparatus continues the processes in step S62 to step S67 while increasing N by 1 (step S68).

In case the moving vectors being calculated from two sheets of successive frames are in excess of a predetermined value, there is a possibility that the pixel values configuring these frames are largely varied. Even when the interpolation frame is generated based on these frames under such condition, the interpolation frame has a high possibility that the false interpolation might occur. Therefore, according to the reproduction apparatus and the reproduction method of the second embodiment of the present invention, the interpolation frame in which the false interpolation might occur is specified effectively such that the concerned interpolation frame should not be recorded in the output image buffer, and thus the concerned interpolation frame is never output at a time of reproducing the video. As a result, the picture distortion caused by reproducing/outputting the interpolation frame in which the false interpolation occurred can be suppressed.

### (Third Embodiment)

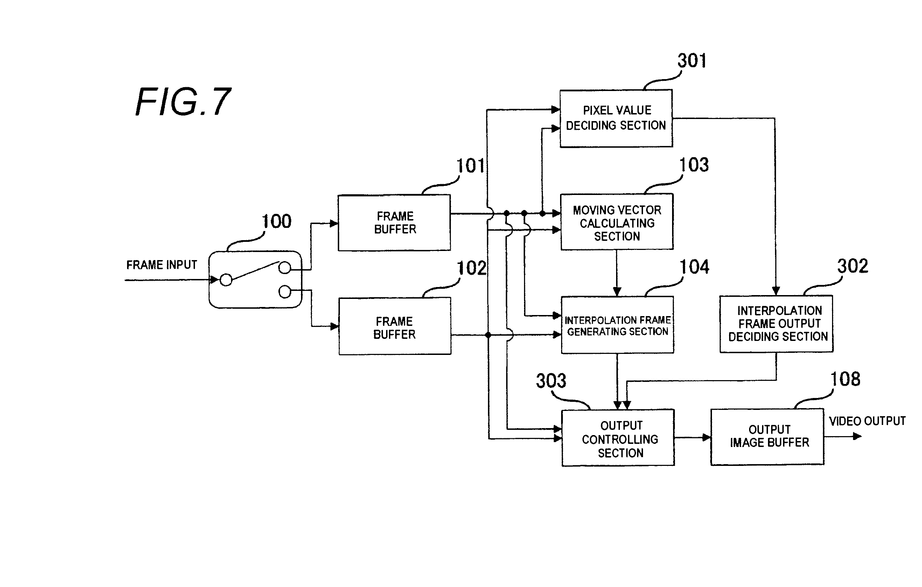

In the second embodiment of the present invention, the configuration for deciding whether or not the false interpolation might occur in the interpolation frame that is generated from two sheets of frames, based on [2] a magnitude of the moving vector that is calculated from two sheets of successive frames, has been explained as above. In this configuration, the moving destination of the block must be specified by the block matching method to calculate the moving vector. In a third embodiment of the present invention, a process simpler than a process deciding whether or not the false interpolation occurs will be explained hereunder. In FIG. 7, a functional block diagram of a reproduction apparatus according to a third embodiment of the present invention is illustrated. In this event, in FIG. 7, respective sections to which the similar reference numerals to those in the functional block diagram shown in FIG. 1 are assigned respectively are similar to those explained in the first embodiment, and therefore their explanation will be omitted herein.

A pixel value deciding section 301 expresses numerically an amount of change between two sheets of successive frames from pixel values configuring the frames stored in the frame buffer 101 and the frame buffer 102. Concretely, the pixel value deciding section 301 calculates a difference of pixel values of the pixels on the same position coordinates between two sheets of frames respectively, and calculates a square means value of the difference in all pixels respectively.

An interpolation frame output deciding section 302 compares the square means value of the difference that the pixel value deciding section 301 calculates with a predetermined threshold. Then, when the square means value of the difference is larger than a predetermined threshold, the interpolation frame output deciding section 302 notifies the output controlling section 203 of this effect.

An output controlling section 303 records the frame being read from the frame buffer 101, the frame being read from the frame buffer 102, and the frame being generated by the interpolation frame generating section 104 in the output image buffer 108, in compliance with the similar rule to the rule explained in the second embodiment, except that the criterion applied to decide whether or not the interpolation frame has a high possibility that the false interpolation might occur is changed from the number OMN of blocks to the square means value of the difference.

According to the reproduction apparatus and the reproduction method of the third embodiment of the present invention, the interpolation frame in which the false interpolation might occur is specified by the simple process such that the concerned interpolation frame should not be recorded in the output image buffer, and thus the concerned interpolation frame is never output at a time of reproducing the video. As a result, the picture distortion caused by reproducing/outputting the interpolation frame in which the false interpolation occurred can be suppressed.

### (Fourth Embodiment)

Next, a reproduction apparatus according to a fourth embodiment of the present invention will be explained hereunder. Out of the mobile terminal equipments in which the recent multifunctional operations are advancing, there are the equipments that fulfill a multitask function in the multi- window environment. According to such mobile terminal equipments, for example, the moving picture contents during reproduction and the contents of the e-mail can be displayed in separate windows.

In this manner, when a plurality of contents are output to the separate windows in the multi-window environment, there is such a tendency that a degree of user's careful attention, which should be paid closely to individual windows respectively, of the equipment is lowered. Even when the moving picture contents are reproduced so as to output the interpolation frame on a need basis in such a state that a degree of user's careful attention of the equipment is lowered, it is apparent that such moving picture contents are reproduced smoothly to exceed the level that the user of the equipment needs. In the mobile terminal equipment of which a power saving is demanded more and more, an excessive power consumption caused due to the process of outputting the interpolation frame should be avoided. For this purpose, in the fourth embodiment of the present invention, the reproduction apparatus capable of lessening an excessive power consumption caused due to the process of outputting the interpolation frame will be explained hereunder.

The reproduction apparatus according to the fourth embodiment of the present invention includes a storing section for storing a frame; a moving vector calculating section for calculating a moving vector based on pixels configuring a first frame that is to be output at a first point of time and a second frame that is to be output at a second point of time, which are stored in the storing section; an interpolation frame generating section for generating an interpolation frame, which is output at a third point of time existing between the first point of time and the second point of time to interpolate the first frame and the second frame, based on the moving vector being calculated by the moving vector calculating section; and an interpolation frame outputting deciding section for deciding that the interpolation frame should not be output, in a period that first contents including the first frame and the second frame and second contents different from the first contents are output simultaneously.

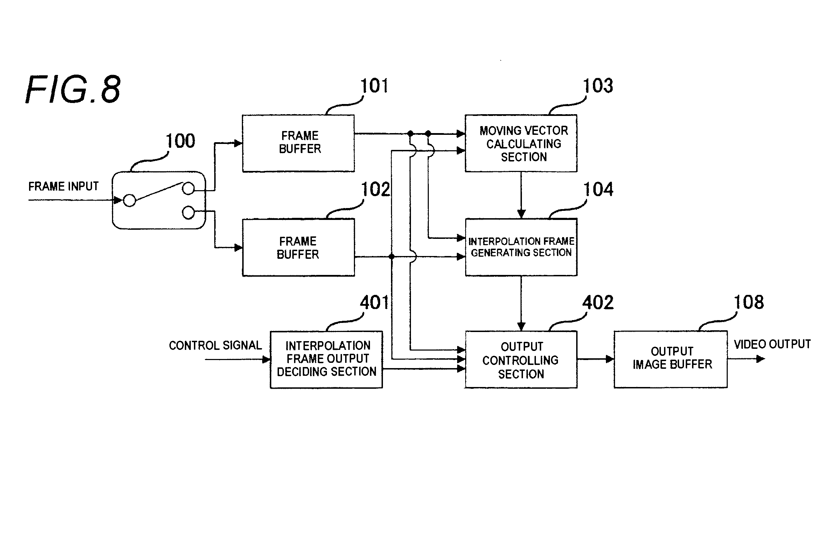

In FIG. 8, a functional block diagram of the reproduction apparatus according to the fourth embodiment of the present invention is illustrated. In this event, in FIG. 8, respective sections to which the similar reference numerals to those in the functional block diagram shown in FIG. 1 are assigned respectively are similar to those explained in the first embodiment, and therefore their explanation will be omitted herein.

When an interpolation frame output deciding section 401 receives the control signal to the effect that various contents are output from other application (e.g., e-mail, phone book, incoming/outgoing call history, or the like) that controls the reproduced output of the contents other than the moving picture contents, this output deciding section 401 notifies the output controlling section 203 of this effect.

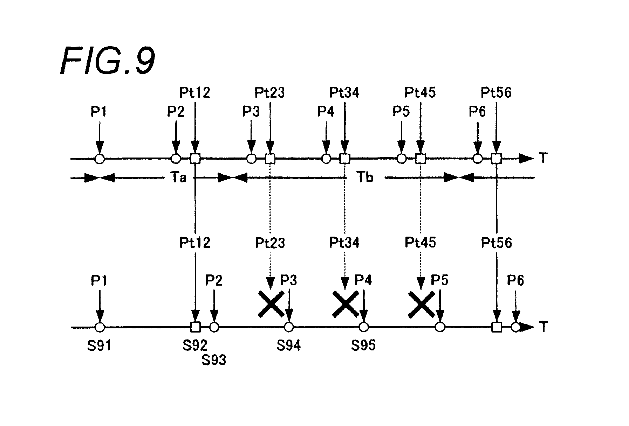

An output controlling section 402 records the frame being read from the frame buffer 101, the frame from the frame buffer 102, and the frame being generated by the interpolation frame generating section 104 in the output image buffer 108, in compliance with the rule explained hereunder. In FIG. 9, time charts explaining a buffering process of an output image in the reproduction apparatus of the fourth embodiment of the present invention is shown. In FIG. 9, a time chart in the upper stage shows timings at which the frame is written into the frame buffers 101, 102 respectively and a timing at which the interpolation frame is generated, and a time chart in the lower stage shows timings at which the frame and the interpolation frame are written into the output image buffer 108.

In the time chart in the upper stage in FIG. 9, a mark "O" denotes a timing at which the frames P1, P2, P3, P4, P5, P6 are written into the frame buffers 101, 102 respectively, and a mark "□" denotes a timing at which interpolation frames Pt12, Pt23, Pt34, Pt45, Pt56 are generated respectively. The interpolation frame generating section 104 generates the interpolation frame PtMN (M=N-1) every time when the new frame PN (N=2, 3, 4, 5, 6) is recorded into the frame buffers 101, 102. For example, the interpolation frame generating section 104 generates the interpolation frame Pt12 when the new frame P2 is recorded.

Also, it is assumed that, in the time chart in the upper stage in FIG. 9, the interpolation frame output deciding section 401 receives the control signal to the effect that various contents are output from other application, in a time interval Ta, and does not receive the control signal to the effect that various contents are output from other application, in a time interval Tb.

Then, the time chart in the upper stage in FIG. 9 will be explained hereunder. When the inputting of the frames configuring certain moving picture contents is started, first the output controlling section 402 reads the head frame P1 from one buffer of the frame buffers 101, 102, and then records this frame in the output image buffer 108 (S91). Then, since the interpolation frame output deciding section 401 has notified the output controlling section 402 that the control signal is not received from other application, the output controlling section 402 records the interpolation frame Pt12 being generated by the interpolation frame generating section 104 in the output image buffer 108 (S92). Then, the output controlling section 402 reads the frame P2 from the other buffer, in which the frame P1 is not recorded, out of the frame buffers 101, 102, and then records this frame in the output image buffer 108 (S93).

Then, when the interpolation frame output deciding section 402 notifies the output controlling section 402 that the control signal is received from other application, the output controlling section 402 does not record the interpolation frame Pt23 being generated by the interpolation frame generating section 104 in the output image buffer 108, but reads the frame P3 from the other buffer, in which the frame P2 is not recorded, out of the frame buffers 101, 102 and then records this frame in the output image buffer 108 (S94).

Then, since the interpolation frame output deciding section 402 has notified the output controlling section 402 that the control signal is received from other application, the output controlling section 402 does not record the interpolation frame Pt34 being generated by the interpolation frame generating section 104 in the output image buffer 108, but reads the frame P4 from the other buffer, in which the frame P3 is not recorded, out of the frame buffers 101, 102, and then records this frame in the output image buffer 108 (S95). Subsequently, the output controlling section 402 similarly records the frame being read from the frame buffer 101, the frame being read from the frame buffer 102, and the interpolation frame being generated by the interpolation frame generating section 104 in the output image buffer 108.

The frames and the interpolation frame, which are recorded in the output image buffer 108 in sequence on the time chart shown in the lower stage in FIG. 9, are video-output in accordance with that sequence.

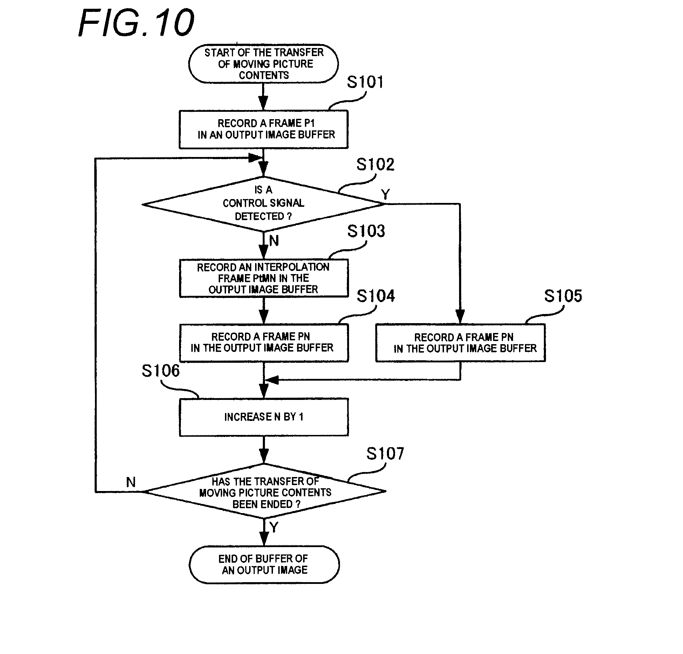

The writing process into the output image buffer in the reproduction apparatus of the fourth embodiment of the present invention is given in the generalized form as follows. In FIG. 10, a flowchart explaining a writing process into an output image buffer in the reproduction apparatus of the fourth embodiment of the present invention is shown.

When the inputting of the frames configuring some moving picture contents is started, first the reproduction apparatus reads the head frame P1 from one buffer of the frame buffers 101, 102, and then records this frame in the output image buffer 108 (step S101).

Then, the reproduction apparatus decides whether or not the control signal to the effect that various contents are output from other application is detected (step S102). If the control signal is not detected (step S102, N), the reproduction apparatus records the interpolation frame PtMN in the output image buffer 108 (step S103). Then, the reproduction apparatus reads the frame PN from the other buffer, in which the frame PN is not recorded, out of the frame buffers 101, 102, and then records this frame in the output image buffer 108 (step S104).

In contrast, if the control signal is detected (step S102, Y), the reproduction apparatus reads the frame PN from the other buffer, in which the frame PM is not recorded, out of the frame buffers 101, 102, and then records this frame in the output image buffer 108 (step S105).

Then, while the inputting of the moving picture contents is being continued (step S107, N), the reproduction apparatus continues the processes in step S102 to step S105 while increasing N by 1 (step S106).

With the above, according to the reproduction apparatus of the fourth embodiment of the present invention, the outputting of the interpolation frame is not output in such a state that a degree of user's careful attention of the equipment is lowered. As a result, an excessive power consumption caused due to the process of outputting the interpolation frame can be lessened.

Here, as shown in FIG. 9, the reproduction apparatus of the fourth embodiment of the present invention is set forth such that the interpolation frame is generated irrespective of whether or not the control signal to the effect that various contents are output from other application is detected. In this case, such a process may be executed together that the interpolation frame is generated when the control signal is not detected whereas the interpolation frame is not generated when the control signal is detected. As a result, the generation of the interpolation frame is not performed in such a state that a degree of user's careful attention of the equipment is lowered, so that an excessive power consumption caused due to the process of outputting the interpolation frame can be lessened.

Also, as an example of the period in which a degree of user's careful attention of the equipment is lowered, the period in which various contents are output from other application may be listed. But the period in which a degree of user's careful attention of the equipment is lowered is not limited to this mode. For example, such a configuration may be employed that the outputting of the interpolation frame or the generation of the interpolation frame should not be performed in the period during which a pop-up menu is being output.

### (Fifth Embodiment)

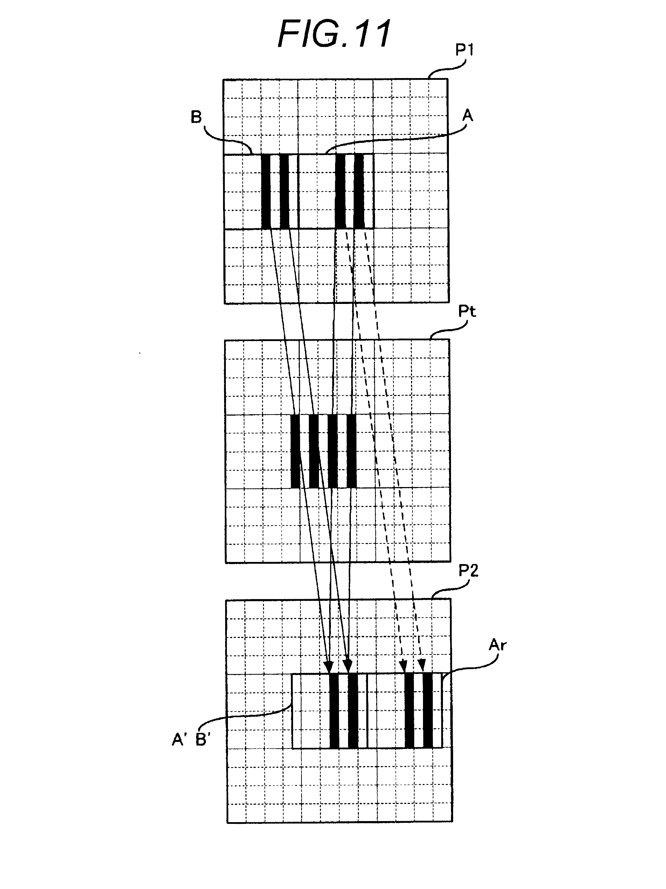

In a fifth embodiment of the present invention, a reproduction apparatus capable of suppressing that a slit noise is generated in the moving picture contents that are being output will be explained hereunder. First, the slit noise is will be explained hereunder. In FIG. 11, views explaining the slit noise are illustrated.

In FIG. 11, out of two sheets of successive frames P1, P2, the frame P1 whose output timing is early is recited in the upper stage, and the frame P2 whose output timing is late is recited in the lower stage. As shown in the frames P1, P2 in the upper stage and the lower stage in FIG. 11, when stripe slits are contained in the frames P1, P2, the interpolation frame Pt shown in the middle stage in FIG. 11 is generated. That is, when it is estimated by the block matching method to which part of the frame P2 the block A in the frame P1 should be shifted, it should be estimated essentially that this block A is shifted to an area Ar in the frame P2, nevertheless sometimes it is estimated that this block A is shifted to an area A' in the frame P2, which is different from the area Ar. On the contrary, it is assumed precisely that the block B in the frame P1 is shifted to an area B' in the frame P2 (the area A' and the area B' overlap with each other in the lower stage in FIG. 11).

The cause why the block A in the frame P1 is estimated wrong as described above are given by two following aspects. That is, the first aspect is that a matching accuracy of the matching executed by the block matching method is not so high to discriminate the slit one by one, and the second aspect is that, in order to lessen the burden of the computing process required for the matching, the matching to the block A in the frame P2 is checked from the area that is located closer to the block A in the frame P1. As a result, as shown in FIG. 11, the block A in the frame P1 is estimated wrong such that this block A was shifted to the area A' located closer to the block A in the frame P2.

When the calculation of the moving vector MV for each block A, B and the process of defining a part of interpolation frame Pt are performed based on this estimated result, the interpolation frame shown in the middle stage in FIG. 11 is generated. This interpolation frame is not matched up with the frames P1, P2 located just before and after the interpolation frame respectively, and also an interval between the slits in the interpolation frame is different from those in the frames P1, P2. Therefore, when the frames P1, P2 and the interpolation frame Pt are output successively, a flicker of the slit becomes more conspicuous. This flicker of the slit caused due to the outputting of such interpolation frame is referred to as the "slit noise" in this specification.

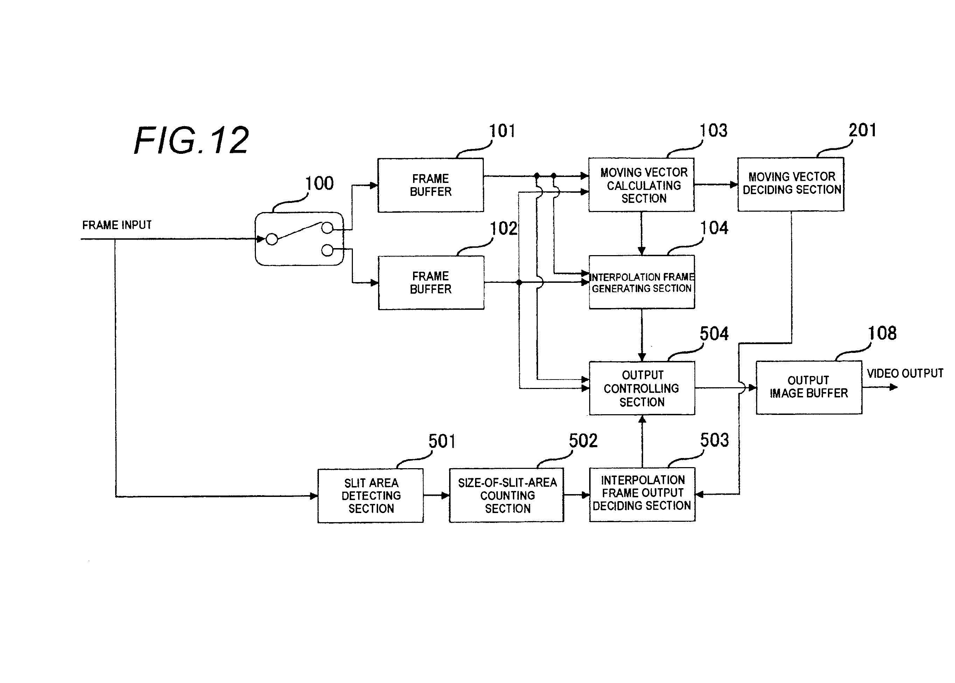

The reproduction apparatus according to the fifth embodiment of the present invention will be explained hereunder. In FIG. 12, a functional block diagram of the reproduction apparatus of the fifth embodiment of the present invention is illustrated. In this event, in FIG. 12, respective sections to which the similar reference numerals to those in the functional block diagrams shown in FIG. 1 and FIG. 4 are assigned respectively are similar to those explained in the first embodiment and the second embodiment, and therefore their explanation will be omitted herein.

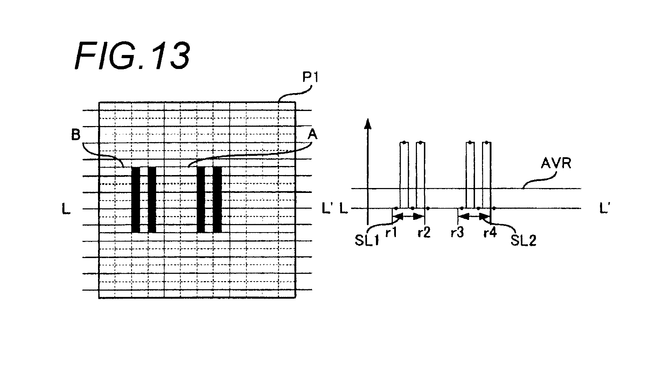

A slit area detecting section 501 extracts the frames that are input into the changing switch 100, and detects the area in which the slit lies in the frame (referred simply to as the "slit area" hereinafter). A detecting process made by the slit area detecting section 501 will be explained with reference to the views, which explain the process of detecting the slit area and shown in FIG. 13, hereunder. The slit area detecting section 501 picks out the pixels configuring the frame for each row (each column), calculates an average value AVR of these pixel values (AVR shown in FIG. 13), and detects whether or not the pixels whose pixel value is changed periodically to exceed and fall down the average value AVR are present. FIG. 13 shows such a situation that two slits SL1, SL2 are detected in the pixels on certain rows L-L' configuring the frame. Then, the slit area detecting section 501 detects the position coordinates of the pixels acting as a start point and an end point every slit (in the slit SL1, a start point is r1 and an end point is r2 while, in the slit SL2, a start point is r3 and an end point is r4). The slit area detecting section 501 detects the slit areas in the frames by applying this process to all rows (or all columns) configuring the frames.

A size-of-the-slit-area counting section 502 counts an area of the slit areas detected by the slit area detecting section 501 (a total number of pixels of the slit areas), and outputs the area to an interpolation frame output deciding section 503. Here, in some cases the area of the frames PN (N=1, 2,...) counted by the size-of the-slit-area counting section 502 is also recited as SN.

The interpolation frame output deciding section 503 compares the number of blocks, which are decided by the moving vector deciding section 201 to have the moving vector whose magnitude is in excess of a certain threshold, with a predetermined threshold. Also, the interpolation frame output deciding section 503 compares an area of the slit areas being input from the size-of-the-slit-area counting section 502 with a predetermined threshold. Then, the interpolation frame output deciding section 503 notifies an output controlling section 504 of respective compared results.

In the fifth embodiment, it is preferable that the criterion that is applied by the moving vector deciding section 201 to decide whether or not the magnitude of the moving vector is in excess of a certain threshold should be set smaller in comparison to the case where only the moving vector is utilized as the criterion that is applied to decide whether or not the interpolation frame has a high possibility that the false interpolation might occur, like the second embodiment.

The output controlling section 504 records the frame being read from the frame buffer 101, the frame being read from the frame buffer 102, and the interpolation frame being generated by the interpolation frame generating section 104 in the output image buffer 108, in compliance with the rule responding to the compared result that is notified from the interpolation frame output deciding section 503. The writing process of the output controlling section 504 to write the frame into the output image buffer 108 is summarized in Table 1. In Table 1, an example of the process of recording the number of blocks and the area of the slit areas into the output image buffer 108 is shown.

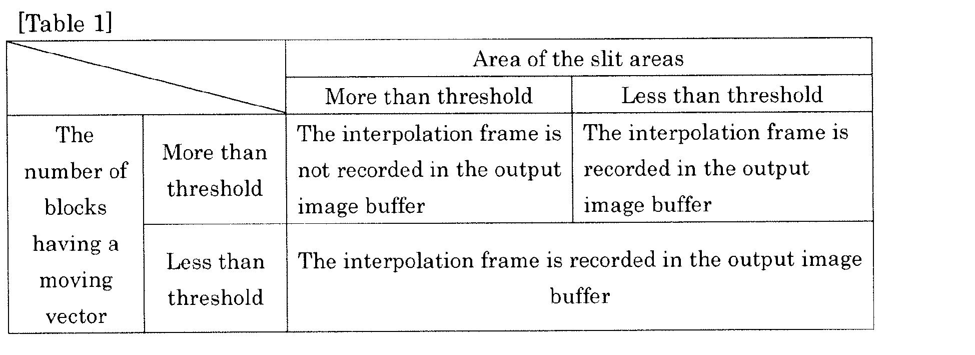

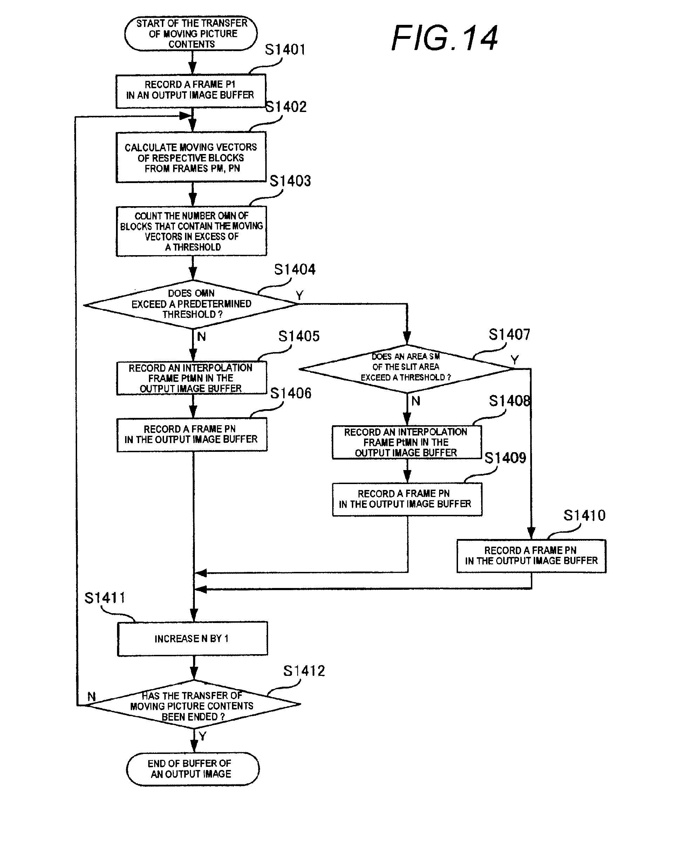

The writing process of the interpolation frame into the output image buffer in the reproduction apparatus of the fifth embodiment of the present invention will be explained with reference to a flowchart, which explains the writing process into the output image buffer in the reproduction apparatus of the fifth embodiment of the present invention and is shown in FIG. 14, hereunder.

When the inputting of the frames configuring some moving picture contents is started, first the reproduction apparatus reads the head frame P1 from one buffer of the frame buffers 101, 102, and then records this frame in the output image buffer 108 (step S1401).

Then, the reproduction apparatus calculates the moving vectors of respective blocks from two sheets of successive frames PM, PN (step S1402). Then, the reproduction apparatus counts the number OMN of blocks that have the moving vectors whose magnitude is in excess of a certain threshold (step S1403).

Then, the reproduction apparatus decides whether or not the number OMN (M=N-1, N=2, 3,...) of blocks exceeds a predetermined threshold (step S1404). If the number OMN of blocks does not exceed the predetermined threshold (step S1404, N), the reproduction apparatus records the interpolation frame PtMN in the output image buffer 108 (step S1405). Then, the reproduction apparatus reads the frame PN from the other buffer, in which the frame PM is not recorded, out of the frame buffers 101, 102, and then records this frame in the output image buffer 108 (step S1406).

It may be considered that, if the number OMN of blocks does not exceed the predetermined threshold, an amount of change of the values of respective pixels configuring two sheets of successive frames PM, PN is small. In this case, the slit noise is hard to generate in the interpolation frame being generated from the frames PM, PN, and a visual influence of the slit noise on the viewer is extremely small if the slit noise is generated. Therefore, even though the interpolation frame PtMN is recorded in the output image buffer, the influence of the slit noise can be satisfactorily suppressed.

In contrast, if the number OMN of blocks exceeds the predetermined threshold (step S1404, Y), the reproduction apparatus decides whether or not an area SM of the slit area in the frame PM exceeds a predetermined threshold (step S1407). If the area SM of the slit area in the frame PM is below the predetermined threshold (step S1407, N), the reproduction apparatus records the interpolation frame PtMN in the output image buffer 108 (step S1408). Then, the reproduction apparatus reads the frame PN from the other buffer, in which the frame PM is not recorded, out of the frame buffers 101, 102, and then records this frame in the output image buffer 108 (step S1409). In contrast, if the area SM of the slit area in the frame PM exceeds the predetermined threshold (step S1407, Y), the reproduction apparatus reads the frame PN from the other buffer, in which the frame PM is not recorded, out of the frame buffers 101, 102, and then records this frame in the output image buffer (step S1410).

It may be considered that, if the number OMN of blocks exceeds the predetermined threshold, an amount of change of the values of respective pixels configuring two sheets of successive frames PM, PN is large. In such case, as explained in the second embodiment of the present invention, one solving means is that the concerned interpolation frame should not be output upon reproducing the video, by not recording the interpolation frame in the output image buffer. In the fifth embodiment of the present invention, it is decided whether or not the concerned interpolation frame should be recorded in the output image buffer, in not only the condition that the number OMN of blocks exceeds the predetermined threshold but also the condition that the area of the slit area in the frame PM exceeds the predetermined threshold. As a result, the smooth frames can be reproduced and output in view of the influence of the slit noise.

Then, while the inputting of the moving picture contents is being continued (step S1412, N), the reproduction apparatus continues the processes in step S1402 to step S1410 while increasing N by 1 (step S1411).

With the above, various embodiments of the present invention are explained, but the present invention is not limited to the matters illustrated in the above embodiments. The present invention is susceptible to the variation and the application, which are made by those skilled in the art based on the description of the specification and the well-known technology and are contained in a scope within which a protection is sought.

This application is based upon Japanese Patent Application (Patent Application No.2007-308530) filed on November 29, 2007; the contents of which are incorporated herein by reference.

### Industrial Applicability

With the above, according to the reproduction apparatus and the reproduction method of the present invention, such an advantage can be achieved that the flicker or the picture distortion caused when the interpolation frame, in which the false interpolation occurred, is reproduced and output can be suppressed by specifying effectively the interpolation frame, in which the false interpolation might occur, not to output the concerned interpolation frame upon reproducing the video. Also, the present invention is useful for the field of the reproduction apparatus that is capable of improving the temporal resolution by generating the interpolation frame from two sheets of successive frames and then reproducing the frames including the interpolation frame.

## Claims

1. A reproduction apparatus, comprising:
a storing section for storing frames;
a moving vector calculating section which is adapted to calculate a moving vector based on pixels configuring a first frame stored in the storing section at a first point of time and a second frame stored in the storing section at a second point of time;
an interpolation frame generating section which is adapted to generate an interpolation frame to interpolate the first frame and the second frame, based on the moving vector calculated by the moving vector calculating section; and
an interpolation frame output deciding section which is adapted to decide whether the interpolation frame should be output or not, based on a change between the first frame and the second frame.

2. The reproduction apparatus according to claim 1, further comprising:
a frame interval measuring section which is adapted to measure a time interval between the first point of time and the second point of time,
wherein, when the time interval measured by the frame interval measuring section is not less than a first threshold, the interpolation frame output deciding section decides that the interpolation frame should not be output.

3. The reproduction apparatus according to claim 1, wherein, when a magnitude of the moving vector calculated by the moving vector calculating section is not less than a second threshold, the interpolation frame output deciding section decides that the interpolation frame should not be output.

4. The reproduction apparatus according to claim 3, further comprising:
a slit area specifying section which is adapted to specify a slit area contained in the first frame or the second frame,
wherein, when the magnitude of the moving vector calculated by the moving vector calculating section is not less than a third threshold whose value is smaller than the second threshold and a size of the slit area specified by the slit area specifying section is not less than a fourth threshold, the interpolation frame output deciding section decides that the interpolation frame should not be output.

5. The reproduction apparatus according to claim 1, wherein, when a difference between pixel values on at least one coordinates configuring the first frame and the second frame respectively is not less than a fifth threshold, the interpolation frame output deciding section decides that the interpolation frame should not be output.

6. A reproduction method, comprising:
a step of storing a first frame at a first point of time;
a step of storing a second frame at a second point of time;
a step of calculating a moving vector based on pixels configuring the first frame and the second frame;
a step of generating an interpolation frame to interpolate the first frame and the second frame, based on the moving vector; and
a step of deciding whether the interpolation frame should be output or not, based on a change between the first frame and the second frame.
